# EUROPÄISCHE PATENTSCHRIFT

(11) **EP 0 996 213 B1**
(45) Veröffentlichungstag und Bekanntmachung des Hinweises auf die Patenterteilung: **04.07.2001**
(21) Anmeldenummer: 98119399.8
(22) Anmeldetag: 14.10.1998
(51) Int. Cl.: H02K 5/22, H02K 11/00, H02K 7/116

(54) **Motoranschlussstecker, insbesondere für einen drehzahlstellbaren Kommutatormotor**
Motor connector, in particular for adjustable speed commutator motor
Connecteur pour moteur, notamment pour moteur à collecteur à vitesse réglable

(43) Veröffentlichungstag der Anmeldung: 26.04.2000
(73) Patentinhaber: SIEMENS AKTIENGESELLSCHAFT, 80333 München (DE)
(72) Erfinder: Knopp, Carsten, 93186 Pettendorf (DE)

(56) Entgegenhaltungen:
- EP-A- 0 538 495
- DE-A- 4 019 787
- FR-A- 2 691 024
- US-A- 4 616 149
- PATENT ABSTRACTS OF JAPAN vol. 015, no. 438 (E-1130), 8. November 1991 & JP 03 183338 A (T G K:KK), 9. August 1991

## Beschreibung

Die Erfindung bezieht sich auf einen Motoranschlußstecker, insbesondere für einen drehzahlstellbaren Kommutatormotor gemäß Patentanspruch 1; derartige Steckverbinder werden insbesondere für Stellantriebe in Kraftfahrzeugen zwischen motorinneren Stromversorgungs- und Regel- bzw. Steuerbauteilen einerseits und einer motoräußeren elektrischen Versorgungsund Regel- bzw. Steuereinheit benötigt, die vorzugsweise in einem zum Motorgehäuse gesonderten Elektronikgehäuse untergebracht ist; als Elektromotor, gegebenenfalls mit nachgeschaltetem Getriebe, kommen bevorzugt aus dem Kraftfahrzeug-Gleichstrombordnetz gespeiste Kommutatormotoren in Anwendung.

Durch die DE 40 19 787 A1 ist ein elektromotorischer Fensterheberantrieb bekannt, dessen Antriebseinheit zusammen mit einem Drehzahlsensor und einer damit verbundenen Steuer- und Regelelektronik in einem gemeinsamen, feuchtigkeitsdichten Gehäuse angeordnet ist; eine die Steuer- und Regelelektronik aufnehmende Platine ist durch eine Öffnung des Gehäuses radial zur Motorachse in dieses einsteckbar und wird dabei sowohl mit Steckkontakten der Antriebseinheit kontaktiert als auch mit einem Drehzahlsensor in die Nähe eines rotorseitigen Drehzahlgebers gebracht; die Platine ist in dem gemeinsamen Gehäuse im wesentlichen parallel zur Motorachse angeordnet.

Durch die EP 0 538 954 B1 ist weiterhin eine Kommutatormotor-Getriebe-Antriebseinheit mit einem an das Getriebegehäuse ansteckbaren, parallel zum Motorgehäuse verlaufenden Elektronikgehäuse bekannt; beim gegenseitigen mechanischen Verbindung von Getriebegehäuse und Elektronikgehäuse wird eine in dieser gehaltene, eine Steuer- und Versorgungselektronik aufnehmende Platine mit Motoranschlüssen auf einer Bürstentragplatte des Kommutatormotors kontaktiert.

Durch die US-A-4 616 149 bzw. die korrespondierende DE 33 35 035 C2 ist eine Anordnung zum Verbinden der Wicklungsenden eines gehäuselosen Außenläufermotors mittels Steckverbinder bekannt; dazu ist eine durch axiale Zuführung montierbare, im Bereich ihrer zentralen Öffnung an einem durchgreifenden Stirnisolationsschaft des Statorblechpaketes verpreßte, verklebte oder verschweißte Isolierscheibe bekannt, die neben einem die Wickelköpfe abdeckenden Bereich einen, zusätzlichen radial vorstehenden Aufnahmebereich mit radial offenen Taschen auf, in die radial zu kontaktierende Steckverbinder einsetzbar und in ihrer Montageendstellung verrastbar sind. Die Steckverbinder dienen mit ihren äußeren Steckanschlüssen zum Anschluß an eine äußere Anschlußleitung und sind mit ihren inneren Anschlüssen mit Wicklungsenden unmittelbar oder in Reihe mit einem Thermowächter mittelbar verlötet oder verschweißt.

Gemäß Aufgabe vorliegender Erfindung soll auf fertigungs- und montagetechnisch einfache Weise eine betriebssichere elektrische Kontaktierungsverbindung zwischen motorinneren Anschlüssen und motoräußeren Anschlüssen, insbesondere zwischen einer motorinneren Bürstentragplatte und einer motoräußeren Versorgungs- bzw. Regeleinheit auf einer Platine gewährleistet werden.

Der erfindungsgemäße Steckverbinder erlaubt eine einfache, automatengerechte Bestückung seines Isolationskörpers bei gleichzeitig hoher Positions- und damit Paßgenauigkeit der Kontaktbahnen relativ zu deren Gegenkontakten bei Erreichen des gegenseitigen betriebsmäßigen Montageendzustandes; soll der Steckverbinder gleichzeitig zu einer Signalübertragung, insbesondere von einem rotorseitigen motorinneren Drehzahlgeber zu einer gehäuseäußeren Regel- bzw. Steuereinheit dienen, so ist nach einer Ausgestaltung der Erfindung vorgesehen, vorzugsweise vor der Bestückung mit den Strom-Kontaktbahnen, Signal-Kontaktbahnen in dem Isolationskörper zu fixieren, insbesondere als Einlegeteile in einer Spritzgußform in den Kunststoff-Isolationskörper miteinzugießen. Die Signal-Kontaktbahnen sind in vorteilhafter Weise mit zumindest einem, an dem motorinneren Endstück des Isolationskörpers fixierbaren, dem Drehzahlgeber zuordbaren Drehzahlsensor kontaktiert.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in perspektivischer Ansicht einen Motoranschlußstecker als Steckverbinder zwischen motorinneren Bauteilen einerseits und einer motoräußeren Versorgungs- bzw. Steuereinheit andererseits;
- FIG 2: die Anordnung gemäß FIG 1 in axialer Stirnansicht;
- FIG 3-5: jeweils in perspektivischer Ansicht den Motoranschlußstecker gemäß FIG 1,2 in drei verschiedenen Einsteck-Montagestellungen der Strom-Kontaktbahnen relativ zum diese aufnehmenden Isolationskörper;
- FIG 6-8: jeweils in Seitenansicht Schnittverläufe durch den Zwischenstecker gemäß FIG 3-5 in einer ersten Ebene mit den Signal-Kontaktbahnen, in einer zweiten Ebene mit einer ersten Strom-Kontaktbahn und in einer dritten Ebene mit einer zweiten Strom-Kontaktbahn.

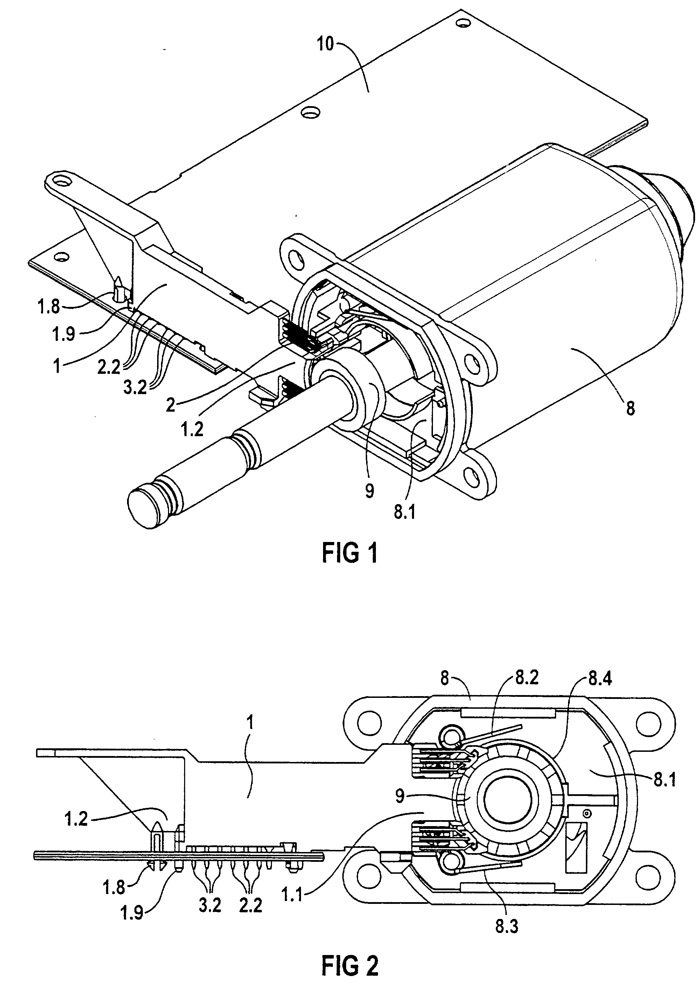

Ein Kommutatormotor ist an eine außerhalb seines Motorgehäuses 8 angeordnete, hier durch eine Platine repräsentierte Versorgungs- bzw. Steuereinheit 10 über einen Motoranschlußstecker in Form eines Steckverbinders verbunden, der mit seinem einen Ende in das Motorinnere des kommutatorseitigen, in FIG 1,2 noch nicht verschlossenen Endes des Motorgehäuses 8 hineinragt und mit seinem anderen Ende mit der Versorgungsbzw. Steuereinheit 10 kontaktierbar ist.

Der Motoranschlußstecker besteht im wesentlichen aus einem, vorzugsweise aus Kunststoff gespritzten, Isolationskörper 1 mit darin aufgenommenen Strom-Kontaktbahnen 4;5 zwischen motorinneren elektrischen Strom-Anschlüssen einerseits und motoräußeren elektrischen Strom-Anschlüssen der Versorgungsbzw. Steuereinheit 10 bzw. mit darin aufgenommenen Signal-Kontaktbahnen 2;3, deren motorinnere aus einem motorinnenseitigen Endstück 1.1 des Isolationskörpers 1 herausstehenden freien Kontaktenden 2.1;3.1 an je einen in diesem Endstück gehaltenen, einem rotorseitigen Polrad 9 als Drehzahlgeber der Rotorwelle des Kommutatormotors zugeordneten Drehzahlsensor 6;7 anschließbar sind.

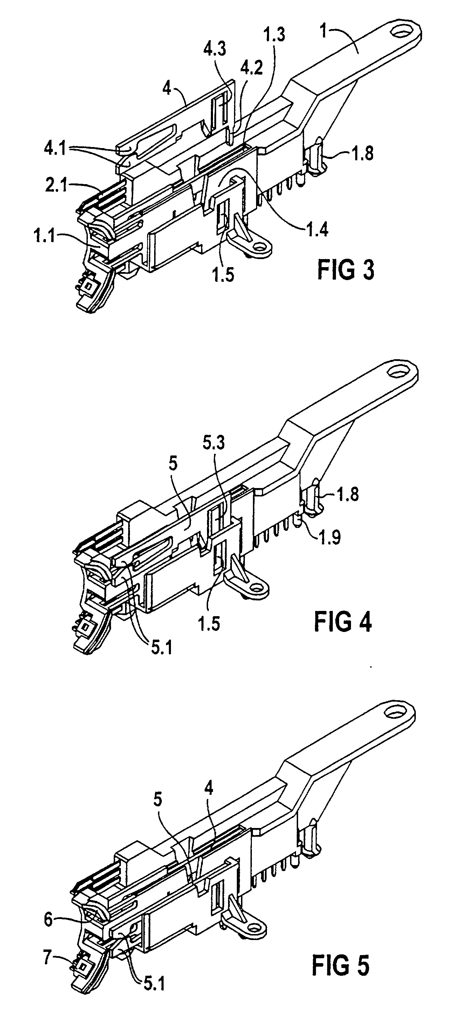

Wie insbesondere aus FIG 3 - FIG 5 entnehmbar, sind die Strom-Kontaktbahnen 4;5 als vorgefertigte, vorzugsweise biegegestanzte, Einzelteile in korrespondierende taschenartige Einschubaufnahmen 1.3;1.4 des Isolationskörpers 1 geführt einsteckbar und bei Erreichen ihrer Endposition durch Einrasten von angeformten Spreizzungen 4.3;5.3 hinter Spreizzungenaufnahmen 1.5 in dem Isolationskörper 1 in Gegenrichtung sicherbar; eine derartige Konstruktion erlaubt einerseits eine einfache Automatenbestückung der Isolationskörper 1 mit den Strom-Kontaktbahnen 4;5 und gewährleistet andererseits eine für eine spätere Kontaktierung vorteilhafte genaue Positionsfixierung der Strom-Kontaktbahnen 4;5.

Die Strom-Kontaktbahnen 4;5 weisen im Bereich des motorseitigen Endstück 1.1 des Isolationskörpers 1 Klemmzungen 4.1;5.1 auf, die bei der gegenseitigen Montage des Motoranschlußsteckers und des Motorgehäuses 8 bei Erreichen der betriebsmäßigen Montageendstellung Kontaktgegenzungen einklemmen, die an der Bürstenplatte 8.1 motorseitig befestigt sind und als Stromzuführung zu den einen Kommutator 8.4 beschleifenden Bürsten 8.2;8.3 dienen. Sowohl in der Ebene der ersten Strom-Kontaktbahn 4 als auch in der Ebene der zweiten Strom-Kontaktbahn 5 ist an jeder jeweils am motoräußeren Ende ein Steckkontakt 4.2 bzw. 5.2 aus dem Isolationsstück 1 herausgeführt, mit dem die Strom-Kontaktbahnen mit korrespondierenden Anschlüssen der Versorgungs- bzw. Steuerschaltung 10 kontaktierbar sind, insbesondere nach dem Einstecken mit Leiterbahnen verlötbar bzw. verpreßbar sind.

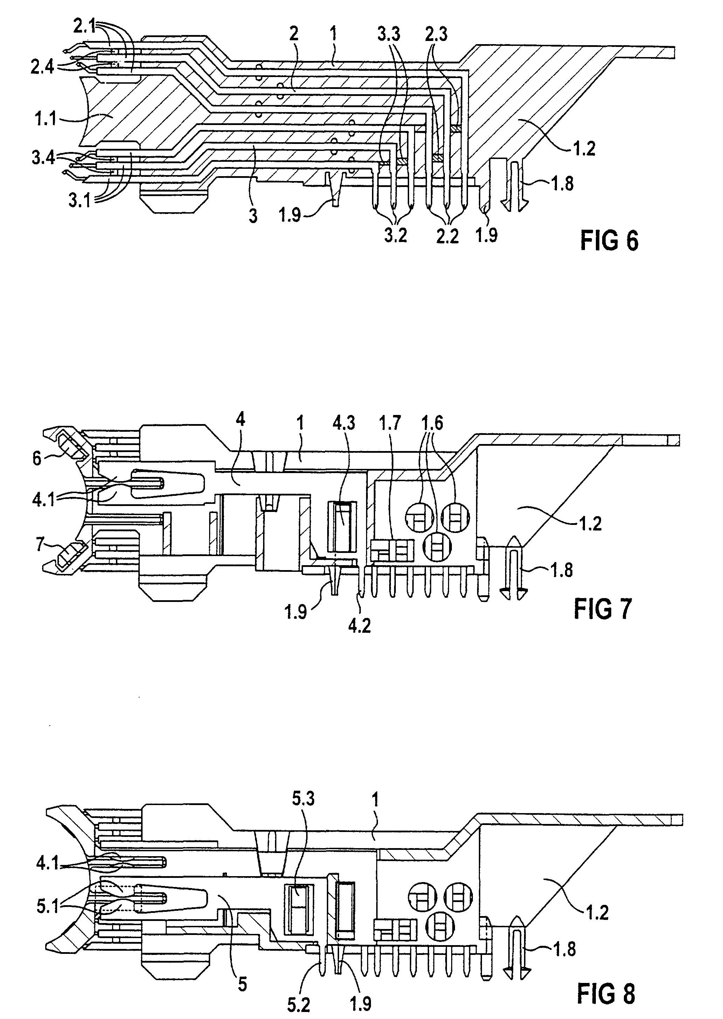

Wie insbesondere aus FIG 6 ersichtlich, sind in einer zu der Ebene der Strom-Kontaktbahnen 4 bzw.5 beabstandeten weiteren Ebene des Isolationsstücks 1 Signal-Strombahnen 2;3 aufgenommen, die nach einem bevorzugten Ausführungsbeispiel der Erfindung beim Spritzen bzw. Gießen des Isolationskörpers 1 in dessen Spritz- bzw. Gießformen positioniert eingelegt und anschließend miteingespritzt sind. Gemäß den Ausführungsbeispielen dienen jeweils drei Signal-Kontaktbahnen zur Verbindung zwischen der motoräußeren Versorgungs- bzw. Steuereinheit 10 einerseits und den am motorinneren Endstück 1.1 des Isolationsköprers 1 gehalterten Drehzahlsensoren 6;7 in Form von Hallwandlern, die einem rotorseitigen Drehzahlgeber 9, insbesondere in Form eines auf der Rotorwelle befestigten Polrades, zuordbar sind. Zum Kontaktieren mit den Drehzahlsensoren 6;7 dienen freie Kontaktenden 2.1;3.1 am motorinneren Ende der Kontaktbahnen 2;3; in ähnlicher Weise sind am motoräußeren Ende der Kontaktbahnen 2;3 freie Kontaktenden 2.2;3.2 zur Kontaktierung mit der Versorgungs- bzw. Steuereinheit 10 vorgesehen.

Zur Vorpositionierung der insgesamt sechs Signal-Kontaktbahnen sind diese beim Einlegen in die Spritz- bzw. Gießform im Isolationskörper 1 noch im Sinne einer zusammenhängenden Signal-Kontaktbahneinheit, z.B. durch Fixierungs-Verbindungsstege 2.3;2.4 bzw. 3.3;3.4, miteinander verbunden, derart daß nach dem Erhärten des gespritzten bzw. gegossenen Isolations-körpers 1 die ansonsten kurzschlußgebenden Fixierungs-Verbindungsstege wegstanzbar und dadurch die eigentlichen Signal-Kontaktbahnen freistanzbar sind; soweit notwendig, sind als Zugang für entsprechende Stanzwerkzeuge in dem Isolationskörper 1 Freistanzöffnungen 1.6 bzw. 1.7 vorgesehen.

Die Versorgungs- bzw. Steuereinheit (10) ist zweckmäßigerweise in einem hier nicht dargestellten, z.B. an dem Isolationskörper 1 gegenseitig abstützbaren, vorzugsweise parallel zu dem Motorgehäuse 8 angeordneten Elektronikgehäuse untergebracht. Zur gegenseitigen Ausrichtung und Fixierung von Isolationskörper und Versorgungs- bzw. Steuereinheit dienen an dem Isolationskörper 1 angebrachte, insbesondere einstückig angespitzte, Führungsmittel 1.9 bzw. Rastmittel 1.8, die mit korrespondierenden Führungsaufnahmen bzw. Rastaufnahmen an der die Versorgungs- bzw. Steuereinheit 10 repräsentierenden Leiterplatte bei Erreichen der gegenseitigen Betriebsendstellung zusammenwirken.

## Patentansprüche

1. Motoranschlußstecker, insbesondere für einen drehzahlstellbaren Kommutatormotor,
- mit einem von außerhalb eines Elektromotor-Gehäuses (8) mit seinem einen Ende in das Innere des Elektromotor-Gehäuses (8) quer zu dessen Achsrichtung einsteckbaren Isolations-Körper (1), insbesondere Kunststoff-Körper;
- mit von dem Isolations-Körper (1) aufgenommenen Strom-Kontaktbahnen (4;5) zwischen bei Erreichen der gegenseitigen Montage-Endposition von Isolations-Körper (1) und Elektromotor-Gehäuse (8) kontaktierten motorinneren elektrischen Strom-Anschlüssen einerseits und motoräußeren elektrischen Strom-Anschlüssen andererseits;
- mit einer quer zur Einsteck- und Kontaktierungsrichtung geführten Einschubhalterung der Strom-Kontaktbahnen (3;4) in taschenartigen Einschubaufnahmen (1.3;1.4) des Isolations-Körpers (1).

2. Motoranschlußstecker nach Anspruch 1
- mit zumindest einem am motorinneren Endstück (1.1) des Isolations-Körpers (1) fixierbaren, einem rotorseitigen Drehzahlgeber (9), insbesondere einem Polrad, zuordbaren Drehzahlsensor (6;7), insbesondere Hallelement;
- mit von dem Isolations-Körper (1) aufgenommenen Signal-Kontaktbahnen (2;3) zwischen motorinneren Kontakt-Anschlüssen zu dem Drehzahlsensor (6;7) einerseits und motoräußeren Signal-Anschlüssen andererseits.

3. Motoranschlußstecker nach Anspruch 2
- mit in den Isolations-Körper (1) eingespritzten Signal-Kontaktbahnen (2;3) mit motorinneren Kontaktenden, insbesondere aus dem motorinneren Endstück (1.1) des Isolations-Körpers (1) herausstehenden freien Kontaktenden (2.1;3.1), zum Anschluß des Drehzahlsensors (6;7).

4. Motoranschlußstecker nach Anspruch 2 und/oder 3
- mit einer Ausbildung der Signal-Kontaktbahnen (2;3) als Freistanzteile einer zunächst in dem Isolations-Körper (1) aufgenommenen zusammenhängenden Signal-Kontaktbahneneinheit, insbesondere eines Kontaktbahnenbleches.

5. Motoranschlußstecker nach zumindest einem der Ansprüche 2-4
- mit einer Ausbildung des motorinneren Endstückes (1.1) des Isolations-Körpers (1) im Sinne einer betriebsmäßigen Zuordnung des zumindest einen aufgenommenen Drehzahlsensors (6 bzw.7) zu dem Drehzahlgeber (8) bei Erreichen der gegenseitigen Montage-Endposition von Motorgehäuse (8) einerseits und Motoranschlußstecker andererseits.

6. Motoranschlußstecker nach zumindest einem der Ansprüche 2-5
- mit einer Ausbildung des motorinneren Endstückes (1.1) des Isolations-Körpers (1) im Sinne einer betriebsmäßigen Steck-Kontaktgabe zwischen den Strom-Kontaktbahnen (4;5) einerseits und motorinneren, insbesondere von einer Bürstenplatte (8.1) eines Kommutatormotors gehaltenen, Gegen-Kontaktstücken andererseits bei Erreichen der gegenseitigen Montage-Endposition von Motorgehäuse (8) einerseits und Motoranschlußstecker andererseits.

7. Motoranschlußstecker nach Anspruch 6
- mit einer der Rundung des als Drehzahlgeber (9) vorgesehenen Polrades angepaßten, motorinneren Endstückes (1.1) des Isolations-Körpers (1).

8. Motoranschlußstecker nach Anspruch 6 und/oder 7
- mit einer Anordnung von je einem Drehzahl-Sensor (6 bzw.7) tangential beidseitig zu der Kontaktgabe der Strom-Kontaktbahnen (4 bzw.5).

9. Motoranschlußstecker nach zumindest einem der Ansprüche 1-8
- mit einer Herausführung bzw. Ausbildung der motoräußeren Enden der Strom-Kontaktbahnen (4;5) und/oder Signal-Kontaktbahnen (2;3) aus dem motoräußeren Endstück (1.2) des Isolations-Körpers (1) im Sinne einer Steckkontaktierung mit einer Versorgungs- bzw. Steuereinheit (10), insbesondere einer Leiterplatte.

10. Motoranschlußstecker nach Anspruch 9
- mit einer im wesentlichen parallel zur Motorachse vorgesehenen Anordnung der Versorgungs- bzw. Steuereinheit (10), insbesondere der Leiterplatte.

## Claims

1. Motor connecting plug, in particular for a variable-speed commutator motor,
- having an insulation body (1), in particular a plastic body, which can be inserted from outside an electric motor casing (8) by its one end into the interior of the electric motor casing (8) transversely to the axial direction thereof;
- having power contact tracks (4; 5), which are held by the insulation body (1), between electrical power connections inside the motor on the one hand, and electrical power connections outside the motor on the other hand, which power connections are made contact with on reaching the mutual final installation position of the insulation body (1) and electric motor casing (8);
- having a push-in mounting, which is guided transversely to the insertion and contact-making direction, for the power contact tracks (3; 4) in pocket-like push-in holders (1.3; 1.4) in the insulation body (1).

2. Motor connecting plug according to Claim 1
- having at least one speed sensor (6; 7), in particular a Hall element, which can be fixed at the end (1.1) of the insulation body (1) inside the motor and can be assigned to a speed encoder (9), in particular a magnet wheel, on the rotor side;
- having signal contact tracks (2; 3), which are held by the insulation body (1), between contact connections, inside the motor, to the speed sensor (6; 7) on the one hand, and signal connections, outside the motor, on the other hand.

3. Motor connecting plug according to Claim 2
- having signal contact tracks (2; 3) which are injection-moulded in the insulation body (1) and have contact ends inside the motor, in particular free contact ends (2.1; 3.1) which project out of that end piece (1.1) of the insulation body (1) which is inside the motor, for the connection of the speed sensor (6; 7).

4. Motor connecting plug according to Claim 2 and/or 3
- having a configuration of the signal contact tracks (2; 3) as stamped-out parts of an integral signal contact track unit, in particular of a contact track plate, which is initially held in the insulation body (1).

5. Motor connecting plug according to at least one of Claims 2-4
- having a configuration of that end piece (1.1) of the insulation body (1) which is inside the motor in the sense of operational assignment of the at least one accommodated speed sensor (6 or 7) to the speed encoder (9) on reaching the mutual final installation position of the motor casing (8) on the one hand and the motor connecting plug on the other hand.

6. Motor connecting plug according to at least one of Claims 2-5
- having a configuration of that end piece (1.1) of the insulation body (1) which is inside the motor in the sense of an operational plug-in contact between the power contact tracks (4; 5) on the one hand and mating contact pieces on the other hand, which are inside the motor and are held, in particular, by a brush plate (8.1) of a commutator motor, on reaching the mutual final installation position of the motor casing (8) on the one hand, and the motor connecting plug on the other hand.

7. Motor connecting plug according to Claim 6
- having an end piece (1.1) of the insulation body (1), which end piece (1.1) is inside the motor and is matched to the curvature of the magnet wheel which is provided as the speed encoder (9).

8. Motor connecting plug according to Claim 6 and/or 7
- having an arrangement of in each case one speed sensor (6 or 7, respectively) tangentially on both sides in order to make contact with the power contact tracks (4 and 5, respectively).

9. Motor connecting plug according to at least one of Claims 1-8
- having an outward-routing or configuration of those ends of the power contact tracks (4; 5) and/or signal contact tracks (2; 3) which are outside the motor, from that end piece (1.2) of the insulation body (1) which is outside the motor, in the sense of a plug-in contact with a supply and control unit (10), in particular a printed circuit board.

10. Motor connecting plug according to Claim 9
- having an arrangement of the supply and control unit (10), in particular the printed circuit board, which is provided essentially parallel to the motor axis.

## Revendications

1. Connecteur de raccordement de moteur, notamment pour un moteur à collecteur dont la vitesse de rotation est réglable,
- comportant un corps (1) isolant, notamment un corps en matière plastique, qui peut être enfiché depuis l'extérieur d'un boîtier (8) de moteur électrique, par l'une de ses extrémités, à l'intérieur du boîtier 8 de moteur électrique, transversalement à sa direction axiale ;
- comportant des pistes (4 ; 5) de contact pour du courant reçu par le corps (1) isolant entre des raccordements électriques pour le courant, intérieurs au moteur, et mises en contact lorsque la position finale mutuelle de montage du corps (1) isolant et du boîtier (8) de moteur électrique est atteinte, d'une part, et des raccordements électriques pour le courant, extérieurs au moteur, d'autre part ;
- comportant une fixation des pistes (3; 4) de contact pour le courant, guidée transversalement à la direction d'enfichage et de mise en contact, dans des dispositifs (1.3; 1.4) de réception d'enfichage en forme de poche du corps (1) isolant.

2. Connecteur de raccordement de moteur suivant la revendication 1,
- comportant au moins un capteur (6; 7) de vitesse de rotation, notamment un élément Hall, pouvant être immobilisé sur une partie (1.1) d'extrémité intérieure au moteur du corps (1) isolant et pouvant être associée à un indicateur (9) de vitesse de rotation située côté rotor, notamment une roue polaire ;
- comportant des pistes (2 ; 3) de contact pour des signaux reçus par le corps (1) isolant, entre des raccordements de contact, intérieurs au moteur avec le capteur (6; 7) de vitesse de rotation, d'une part, et des raccordements, extérieurs au moteur, pour des signaux, d'autre part.

3. Connecteur de raccordement de moteur suivant la revendication 2,
- comportant des pistes (2; 3) de contact pour des signaux moulées par injection dans le corps (1) isolant, ayant des extrémités de contact, intérieures au moteur, notamment des extrémités (2.1; 3.1) de contact libres et faisant saillie de la partie (1.1) d'extrémité, intérieure au moteur, du corps (1) isolant, pour le raccordement du capteur (6; 7) de vitesse de rotation.

4. Connecteur de raccordement de moteur suivant la revendication 2, et/ou 3
- comportant une réalisation des pistes (2; 3) de contact pour les signaux sous la forme de pièces obtenues par découpage d'une unité de piste de contact pour des signaux d'un seul tenant et reçue d'abord dans le corps (1) isolant, notamment sous la forme d'une tôle de piste de contact.

5. Connecteur de raccordement de moteur suivant au moins l'une des revendications 2 à 4,
- comportant une réalisation de la partie (1.1) d'extrémité, intérieure au moteur, du corps (1) isolant en vue d'une association du point de vue du fonctionnement du au moins un capteur (6 et 7) de vitesse de rotation reçu à l'indicateur (8) de vitesse de rotation lorsque la position finale de montage mutuel du boîtier (8) du moteur d'une part et du connecteur de raccordement du moteur d'autre part est atteinte.

6. Connecteur de raccordement de moteur suivant au moins l'une des revendications 2 à 5,
- comportant une réalisation de la pièce (1.1) d'extrémité, intérieure au moteur, du corps (1) isolant en vue de donner un contact par enfichage du point de vue du fonctionnement entre les pistes (4; 5) de contact pour du courant d'une part et des pièces de contact antagonistes, intérieures au moteur, notamment maintenues par une plaque (8.1) de balais d'un moteur à collecteur, d'autre part, lorsque la position finale de montage mutuel du boîtier (8) du moteur d'une part et du connecteur de raccordement du moteur d'autre part est atteinte.

7. Connecteur de raccordement de moteur suivant la revendication 6,
- comportant une partie (1.1) d'extrémité, intérieure au moteur, du corps (1) d'isolation adaptée à l'arrondi de la roue polaire prévue comme indicateur (9) de vitesse de rotation.

8. Connecteur de raccordement de moteur suivant la revendication 6 et/ou 7,
- comportant une disposition de chaque fois un capteur (6 ou 7) de vitesse de rotation tangentiellement de part et d'autre à la mise en contact des pistes (4 et 5) de contact pour le courant.

9. Connecteur de raccordement de moteur suivant au moins l'une des revendications 1 à 8,
- comportant un guidage à l'extérieur et une réalisation des extrémités, extérieures au moteur, des pistes (4; 5) de contact pour du courant et/ou des pistes (2 ; 3) de contact pour les signaux hors de la partie (1.2) d'extrémité, extérieure au moteur, du corps (1) d'isolation en vue d'une mise en contact par enfichage avec une unité (10) d'alimentation et de commande, notamment avec une plaquette à circuit imprimé.

10. Connecteur de raccordement de moteur suivant la revendication 9,
- comportant une disposition prévue sensiblement parallèlement à l'axe du moteur de l'unité (10) d'alimentation ou de commande, notamment de la plaquette à circuits imprimés.
